Europäisches Patentamt

European Patent Office

Office européen des brevets

(11) Publication number: **0 275 839**

**A1**

## EUROPEAN PATENT APPLICATION

(21) Application number: **87830437.7**

(22) Date of filing: **14.12.87**

(51) Int. Cl.⁴: **C08L 95/00** , C09D 3/24

(30) Priority: **15.12.86 IT 2268986**

(43) Date of publication of application:
**27.07.88 Bulletin 88/30**

(84) Designated Contracting States:
**AT BE DE ES FR GB GR NL**

(71) Applicant: **S.A.B.A.H. S.p.A.**
**Via Monferrato, 3/9**
**I-20098 San Giuliano Milanese (Milano)(IT)**

(72) Inventor: **Pessach, Alberto**
**S.A.B.A.H. S.p.A. Via Monferrato 3/9**
**I-20098 San Giuliano Milanese (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) Waterproofing single-component composition for protecing concrete articles of manufacture.

㊻ There is disclosed a waterproofing composition specifically designed for coating and protecting concrete articles of manufacture.

This composition comprises a single component which essentially consists of a combination, in suitable rates, of special elastomeric materials and coal-distilled tars.

The composition, in particular, may be easily applied and is able of forming on the surfaces of the concrete articles, in a comparatively small period of time, a compact and homogeneous protecting film, having a continuous, resilient and flexible texture.

The composition, moreover, may advantageously be used as a finishing compound, or it may be further coated by decorative and/or reflecting paints.

EP 0 275 839 A1

## BACKGROUND OF THE INVENTION

The present invention relates to a single-component waterproofing composition, adapted for cold drying, specifically designed for protecting concrete articles of manufacture.

As is known the protection of buildings and other concrete articles from water represents a very great and difficult problem.

Also known is the fact that conventional solutions to the mentioned problem usually provide for the use of prefabricayed covering assemblies which, however, are not able of providing a satisfactory and long duration waterproofing protection.

In this connection it should be pointed out that because of the very different working conditions and the structural complexity of the surfaces to be waterproofed, the use of prefabricated protecting covering assemblies or membranes is practically impossible.

For waterproofing purposes composite mixtures have been also used, including epoxidic resins and curing agents therefor, as well as mineral fillers and unexpensive diluents.

However, these mixtures, which are also called "paints", or emulsions and which generally comprise two waterproofing components, may be hardly applied, and, moreover, their application requires a lot of time.

In fact, after having mixed the curing component to the base component, the emulsion is to be applied on the surfaces to be waterproofed in a time as small as possible, in order to prevent the paint from prematurely setting.

In this connection it should also be pointed out that, because of the very short setting time, the mentioned known waterproofing mixtures can not be applied by the spray application method.

## SUMMARY OF THE INVENTION

Accordingly, the task of the present invention is to overcome the above mentioned drawbacks, by providing a waterproofing composition, for protecting concrete articles of manufacture, which includes a single component that is may be delivered in a ready for use condition, without the need of mixing it with thickening or curing agents.

Within the scope of the above mentioned task, a main object of the present invention is to provide a waterproofing composition, for protecting concrete articles in general, which is able of providing on said concrete articles, in a comparatively short time, a compact and homogeneous protecting film having a continuous and resilient and flexible structure or texture.

Yet another object of the present invention is to provide such a waterproofing composition for protecting concrete articles, which may be applied in an easy way by using the so-called spray application method.

According to one aspect of the present invention, the above task and objects, as well as yet other objects, which will become more apparent thereinafter, are achieved by a waterproofing composition, for protecting concrete articles, characterised in that it is of the single-component type and comprises a combination, according to given rates, of specific elastomeric materials and tars distilled from coal materials.

More specifically, according to a preferred formulation, the waterproofing composition according to the present invention comprises:

COMPONENTS                                    Parts by weight

a mixture of polyurethane resin

compatible special tars,having a

2

viscosity at 25°C of 1.5 Pa.s,

a water contents of 0.1%, a

phenolic resin contents of 0.1%

by weight,

and a xylene contents of 0% by

weight  .............................  250

-a mixture of polyurethane resin-

compatible special tars having a

viscosity at 25°C of 1.0Pa.s

a water contents of 0.1% by weight

a phenolic resin contents of

0.1% by weight

a xylene contents of 0% by weight ........  250

- p-toluenesulphonylisocyanate  15

- diphenylmethane -4,4-

- diisocyanate with homologous

compounds  .............................  15

- xylene, homologous mixture .............  125

- Organic derivative from montmorri-

lonite clay  ............................  10

- isocyanate prepolymer based on

(homologous) toluylendiisocyanate and /or

diphenylmethane-diisocyanate (homologous)

and polyglicoles with a contents of

reactive NCO = 3 - 3.3% ................... 325

powder zeolite with pores of 3Å 10
_____

1,000

The waterproofing composition having the above formulation has been found to be particularly suitable as replacement and improved material for making waterproofing coatings for article made of concrete (such as terraces, balconies, supporting frames, bridges and the like), for coating asbestos cement articles and the like and for replacing worn coverings of bitumen coated articles, without the need of removing these worn coatings.

Moreover, owing to its high stability to the atmospheric agents, it may advantageosuly be used as a finishing coating layer, or it may be further coated with finishing and/or rerlecting paints and the like.

In this connection, it should be pointed out that the waterproofing composition according to the present invention may be applied by using paintbrushes or the like, or rollers, as well as by the so-called spray method(of the airless type).

A further advantage of the waterproofing composition of the invention is that, as it has set, it will be possible to walk thereon for carrying out other works without damaging it.

In fact this composition forms on the surfaces thereon it is applied a compact and homogeneous film, having a suitably resilient and flexible texture, and with very good wear resistance characteristics.

From the above disclosure it should be apparent that the invention fully achieves the intended task and objects.

While a preferred embodiment of the waterproofing composition according to the present invention has been disclosed, it will be apparent that the disclosed embodiment is susceptible to many modifications and variations all of which will come within the scope and spirit of the invention, as defined in the appended claims.

**Claims**

1-A waterproofing composition, for protecting concrete articles, characterized in that it is of the single component type and comprises a combination, according to suitable rates, of special elastomeric materials and tars distilled from coal; according to a preferred formulation said waterproofing composition comprising;

| Components | Parts by weight |
|---|---|
| - a mixture of polyurethane resin compatible special tars, having a viscosity at 25°C of 1.5 Pa.s, a water contents of 0.1 by weight, a phenolic resin contents of 0.1% by weight, and a xylene contents of 0% by weight ............................ | 250 |
| - a mixture of polyurethane resin-compatible special tars having a viscosity at 25°C of 1.0 Pa.s, a water contents of 0.1% by weight, a phenolic resin contents of 0.1 by weight and a xylene contents of 0% by weight ........................ | 250 |

```
-p-toluensulphonylisocyanate              15

-diphenylmethane -4,4-diiso-

cyanate with homologous compounds         15

-xylene,homologous mixture ........      125

-Organic derivative from

montmorrilonite clay .................    10

-isocyanate polymer based on

(homologous) toluylendiisocyanate

and/or diphenylmethane-diisocyanate

(homologous) and polyglicoles with a

contents of reactive NCO=3-3.3% ......   325

powder zeolite with pores of 3Å ......    10
                                        _____

                                          1,000
```

2-A waterproofing composition, according to the preceding claim, characterized in that the parts by weight of the components of said composition may vary depending on the specific requirements and/or availability at least within given limits; moreover some of the components may also be omitted, or replaced by other chemically equivalent substances, provided that do not substantially modify the main characteristics of the product.

3-A waterproofing composition, according to the preceding claims, characterized in that said composition provides on said concrete article surfaces a compact and homogeneous film, having a continuous texture, suitably resilient and flexible of very high wear resistance.

4-A waterproofing composition, according to the preceding claims, characterized in that it may be applied by a brush, a roller or by a spray method (of the airless type).

5-A waterproofing composition, according to the preceding claims, characterized in that it can be used in replacement of conventional protecting sleeves of any types, for waterproofing concrete articles(such as balconies, terraces, bridges, supporting frames and the like), for protecting asbestos cement articles and the like.

6-A waterproofing composition, according to the preceding claims, characterized in that it can advantageously be used as a finishing layer or further coated by decorative and/or reflecting paints.

7-A waterproofing composition, of the single component type, for protecting concrete articles in general, characterized in that it comprises one or more components, claimed in the preceding claims, with different rates from the claimed rates, which have been claimed by way of an example in claim 1.

European Patent
Office

# EUROPEAN SEARCH REPORT

Application Number

EP 87 83 0437

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | NL-A-7 010 899 (NAPHTACHIMIE)<br>* Claims *<br>--- | 1 | C 08 L 95/00<br>C 09 D 3/24 |
| A | US-A-3 980 597 (M. SHIHADEH)<br>* Examples 1,3; claims 1,4 *<br>--- | 1 | |
| A | FARBE + LACK, vol. 91, no. 3, March 1985, pages 189-193, Hannover, DE; J. KOZAKIEWICZ et al.: " Polyurethan-Bitumen-Mischungen mit Löslichkeit in Kohlenwasserstoffen"<br>* Whole document *<br>--- | 1 | |
| A | GB-A-2 183 241 (SCOTT BADER COMP. LTD)<br>* Claims *<br>--- | 1 | |
| A | CHEMICAL ABSTRACTS, vol. 94, no. 20, 18th May 1981, page 90, abstract no. 158472f, Columbus, Ohio, US; & JP-A-81 00 818 (TAKEDA CHEMICAL INDUSTRIES LTD) 07-01-1981<br>* Abstracts *<br>--- | 1 | **TECHNICAL FIELDS SEARCHED (Int. Cl.4)** |
| A | CHEMICAL ABSTRACTS, vol. 92, no. 12, 24th March 1980, page 272, abstract no. 98522u, Columbus, Ohio, US; J. BATCHELOR et al.: "Adhesion of polyurethane rubbers to concrete" & ADHESION (BARKING, ENGL) 1977, 1, 53-62<br>* Abstract *<br>----- | 1 | C 08 L<br>C 09 D |

The present search report has been drawn up for all claims

| Place of search | Date of completion of the search | Examiner |
|---|---|---|
| THE HAGUE | 11-04-1988 | VON KUZENKO M.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)